# EUROPÄISCHE PATENTSCHRIFT

(11) **EP 2 688 542 B1**
(45) Veröffentlichungstag und Bekanntmachung des Hinweises auf die Patenterteilung: **03.06.2015**
(21) Anmeldenummer: 12711139.1
(22) Anmeldetag: 21.03.2012
(51) Int. Cl.: A61J 1/10, A61J 1/14, A61J 1/18, B29C 65/18, B29C 65/48, B29C 65/00, B29C 65/02, B29L 31/00

(54) **MEDIZINISCHER BEUTEL**
MEDICAL BAG
POCHE MÉDICALE

(30) Priorität: 22.03.2011 EP 11159277; 02.09.2011 EP 11179893
(43) Veröffentlichungstag der Anmeldung: 29.01.2014
(73) Patentinhaber: Nicola, Thomas, 57350 Spicheren (FR); Schmidtlein, Martin, 66113 Saarbrücken (DE)
(72) Erfinder: NICOLA, Thomas, F-57350 Spicheren (FR)
(74) Vertreter: Rippel, Hans Christoph
(86) Internationale Anmeldenummer: PCT/EP2012/054944
(87) Internationale Veröffentlichungsnummer: WO 2012/126925

(56) Entgegenhaltungen:
- WO-A1-98/33449
- WO-A1-98/48765
- DE-A1- 19 728 775
- US-A- 4 632 673

## Beschreibung

Die Erfindung betrifft ein Verfahren zum Herstellen eines medizinischen Beutels, insbesondere eines Infusions- oder Transfusionsbeutels, zur Aufnahme medizinischer Flüssigkeiten. Die Erfindung betrifft ferner den medizinischen Beutel für medizinische Flüssigkeiten, welcher insbesondere zur Aufnahme von Infusions- und Transfusionsflüssigkeiten dient. Auch ein Verfahren zum Entleeren des medizinischen Beutels ist Gegenstand der Erfindung.

Medizinische Beutel zur Aufnahme von Flüssigkeiten sind Massenprodukte, die insbesondere für Infusionen oder Transfusionen verwendet werden. Diese medizinischen Beutel dienen typischerweise zur Aufbewahrung von medizinischen Flüssigkeiten, wie Nährlösung oder Medikamenten. Zur Entnahme oder zum Zuspritzen von medizinischer Flüssigkeit werden üblicherweise Transferelemente eingesetzt. Solche Transferelemente können beispielsweise Spikeports, Nadeln oder Kanülen darstellen. Daher muss ein medizinischer Beutel eine sichere Verschlussmöglichkeit bereitstellen, die gleichzeitig eine unkomplizierte Entnahme bzw. ein unkompliziertes Zuspritzen von medizinischer Flüssigkeit mit Hilfe von Transferelementen erlaubt.

DE-A-197 28 775 beschreibt einen Infusionsbeutel mit einem Zuspritzteil und einem Entnahmeteil. Das Zuspritzteil ist zum Zuführen eines Medikaments mittels einer Injektionsspritze bestimmt, während das Entnahmeteil zur Entnahme der Lösung mittels eines Spikes dient. Zuspritz- und Entnahmeteil weisen ein rohrförmiges Anschlussteil auf, das von einer als Abbrechteil ausgebildeten Schutzkappe verschlossen ist, und werden mittels eines Schlauchstücks mit dem Infusions- oder Transfusionsbeutel verbunden. Zum Befüllen des Beutels mit Nährlösung wird in einer Füllstation ein Fülldorn in das aus dem Beutel vorstehende Schlauchstück eingeführt und der Beutel mit Nährlösung befüllt. Anschließend wird das Schlauchstück abgequetscht und der befüllte Beutel einer Konnektor-Steckstation zugeführt. Dort wird das Zuspritz- bzw. Entnahmeteil auf das Schlauchstück aufgesteckt, und Schlauchstück und Zuspritz- bzw. Entnahmeteil werden miteinander verschweißt. Als nachteilig erweist sich, dass bei der Fertigung des befüllten Beutels ein zusätzliches Schlauchstück erforderlich ist. Darüber hinaus ist nachteilig, dass das Befüllen des Beutels und das Anschließen des Zuspritz-bzw. Entnahmeteils in unterschiedlichen Stationen erfolgt.

In DE 103 137 60 B3 wird ein Konnektor beschrieben, der über ein Anschlussteil verfügt, einen Durchgang zur Aufnahme eines Spikes zur Entnahme der Flüssigkeit aufweist und einen auf das Anschlussteil aufsetzbaren Verschluss aufweist, der den Durchgang in dem Anschlussteil verschließt. Die Verpackung wird durch das Anschlussteil befüllt, und erst nach dem Befüllen der Verpackung wird der Verschluss auf das Anschlussteil aufgesetzt. Im Rahmen dieses Verfahrens müssen unterschiedliche Teile gefertigt werden, was das Verschließen des Beutels erschwert und zusätzlich die Produktionskosten erhöht.

In WO 98/48765 wird ein steriler Konnektor zum Anschluss einer Schlauchleitung an einen Behälter, der eine medizinische Flüssigkeit enthält, beschrieben.

Der Erfindung liegt daher die Aufgabe zugrunde, ein Verfahren zum Herstellen eines medizinischen Beutels für medizinische Flüssigkeiten vorzuschlagen, das die Fertigung des medizinischen Beutels erheblich vereinfacht. Zudem soll das Verfahren die kostengünstige Herstellung eines zuverlässig verschlossenen medizinischen Beutels ermöglichen.

Darüber hinaus ist eine Aufgabe der Erfindung, einen medizinischen Beutel für medizinische Flüssigkeiten bereitzustellen, der einen zuverlässigen Verschluss bereitstellt und ferner eine einfache Entnahme bzw. ein einfaches Zuspritzen der medizinischen Flüssigkeit mittels Transferelementen erlaubt, ohne die sterile Umgebung innerhalb des Beutels zu beeinflussen.

Erfindungsgemäß wird, gemäß den angehängten Ansprüchen, ein Verfahren zum Herstellen eines medizinischen Beutels, insbesondere eines Infusions- oder Transfusionsbeutels, zur Aufnahme medizinischer Flüssigkeiten, vorgeschlagen, das die Schritte umfasst:
a) Bereitstellen eines Kunststoffstrangs und Bereitstellen von Beutelfolie,
b) Verbinden der Beutelfolie und des Strangs zur Ausbildung eines Beutels,
c) Ausbilden des Strangs als einteiliges Portsystems, umfassend einen

Verbindungsbereich, einen Abtrennbereich und einen Verschlussbereich, wobei der Abtrennbereich und der Verschlussbereich in den Strang so eingebracht werden, dass beim Abtrennen des Verschlussbereichs eine sterile Fläche an einer Stirnseite des Verbindungsbereichs geschaffen wird.

Bevorzugt werden die Schritte a), b) und c) in der angegebenen Reihenfolge ausgeführt.

In Schritt c) des erfindungsgemäßen Verfahrens wird am Strang im Bereich außerhalb des medizinischen Beutel das Portsystem ausgebildet. Außerhalb des medizinischen Beutel bezieht sich im vorliegenden Zusammenhang auf den Teil des Strangs der aus dem medizinischen Beutel herausragt und nicht im Bereich der Beutelfolie als Verbindungsbereich dient oder gar in das Innere des medizinischen Beutel hineinragt.

Das Portsystem weist mindestens drei Bereiche und vorzugsweise genau drei Bereiche auf, die aus einem Verbindungsbereich, einem Abtrennbereich und einem Verschlussbereich gebildet werden. In diesem Zusammenhang bezeichnet der Verbindungsbereich den Teil des Strangs, der die Verbindung mit dem medizinischen Beutel herstellt. Der Verschlussbereich und der Abtrennbereich bilden die Bereiche des Strangs, die aus dem medizinischen Beutel herausragen. Diese unterbinden eine Verbindung nach außen und schließen das medizinische Beutelsystem dicht ab.

Das erfindungsgemäße Verfahren zum Herstellen eines medizinischen Beutels, insbesondere Infusions- oder Transfusionsbeutel, ermöglicht es, den gesamten medizinischen Beutel, gegebenenfalls einschließlich des Befüllens mit medizinischer Flüssigkeit, in einer Station zu fertigen. Von Vorteil ist insbesondere, dass das einteilige Portsystem das Herstellungsverfahren gegenüber Lösungen, die auf Steckelementen basieren, maßgeblich vereinfacht. So wird das Portsystem aus einem einfachen Strang gebildet, und es sind keine zusätzlichen Teile zum Verschließen des medizinischen Beutels erforderlich. Damit entfallen zum Beispiel Verfahrensschritte wie das Herstellen der Einzelteile von Steckelementen sowie deren aufwendige Positionierung.

Gegenüber den aus dem Stand der Technik bekannten Steckelementen ist es weiterhin vorteilhaft, dass keine Schnittstellen vorhanden sind und das Auftreten von Mikroleckagen vermindert wird. Dies beugt insbesondere Verkeimungen im medizinischen Beutel vor. Weiterhin können durch die Reibung beim Aufeinanderstecken von Stecksystemen Partikel freigesetzt werden, die in den medizinischen Beutel gelangen und die sterile Umgebung beeinflussen. Mit dem einteiligen Portsystem gemäß dem erfindungsgemäßen Verfahren entfällt das nachträgliche Zusammenstecken von Steckelementen und ein Partikeleintrag dieser Art ist ausgeschlossen.

Das einteilige Portsystem erlaubt es ferner, trotz der einfachen und kostengünstigen Herstellung einen zuverlässigen Verschluss für medizinische Beutel bereitzustellen und die sterile Umgebung für die im medizinischen Beutel bevorratete medizinische Flüssigkeit zu gewährleisten. Beim Gebrauch des medizinischen Beutels kann die sterile Umgebung innerhalb des Beutels durch Transferelemente zur Entnahme oder zum Zuspritzen einer medizinischen Flüssigkeit beeinträchtigt werden. In diesem Zusammenhang erlaubt das einteilige Portsystem gemäß dem erfindungsgemäßen Verfahren, vor Gebrauch des medizinischen Beutels einen Teil des Portsystems abzutrennen und so eine sterile Fläche zu erzeugen, durch die ein steriles Transferelement eingeführt werden kann. Auf diese Weise wird die sterile Umgebung in dem medizinischen Beutel durch das Einstechen von Transferelementen minimal beeinflusst. Weiterhin kann eine dichte Verbindung zwischen dem Portsystem und dem Transferelement hergestellt werden.

Beutelfolie im Rahmen der vorliegenden Erfindung umfasst übliche, dem Fachmann bekannte Folien, die zur Herstellung von medizinischen Beuteln verwendet werden. Dafür kommen im Allgemeinen ein- oder mehrschichtige Folien in Betracht. Ein Beispiel für eine Mehrschichtverbundfolie ist in DE 20 2010 008 675 U1 beschrieben. Diese umfasst eine Aussendeckschicht und eine thermisch siegelfähige Peelschicht. Dabei ist die polare Deckschicht beispielsweise ausgewählt aus Polyethylenterephthalat, Polyurethan, Polylactid, Polycarbonat, Stärkepolymeren, Polystyrol, Polyamid und die Peelschicht umfasst ein TPE oder eine Mischung desselben. Für die Herstellung medizinischer Beutel umfasst die Beutelfolie im Allgemeinen sterilisierbare Kunststoffmaterial und weist eine Dicke von mindestens 100 µm auf, um Beschädigungen zu vermeiden und eine sterile Umgebung im Inneren des medizinischen Beutels aufrechtzuerhalten. Beutelfolie der oben beschriebenen Art ist üblicherweise als doppelt, gewickelte Flachfolie erhältlich, die randbeschnitten oder als Schlauchfolie ohne Randbeschneidung ausgebildet sein kann. Form und Größe der Beutelfolie sind dabei je nach gewünschtem Fassungsvolumen des medizinischen Beutels zu wählen.

Ein Kunststoffstrang im Sinne der Erfindung bezeichnet ein zylinderförmiges Element, das eine runde oder schiffchenförmige Grundfläche aufweisen kann. Unter einem zylinderförmigem Element ist im vorliegenden Zusammenhang ein geometrischer Körper zu verstehen, der aus zwei parallelen Grundflächen und einer Mantelfläche besteht. Der Strang ist dabei als Vollzylinder ausgestaltet.

Für die Anwendung in medizinischen Beutelsystemen weist der Strang typischerweise einen maximale laterale Ausdehnung von 8 bis 20 mm und eine Länge von 5 bis 60 mm auf. Der Strang wird vorzugsweise nicht einzeln gefertigt, sondern in der gewünschten Länge von einem zylinderförmigen Strang mit kontinuierlicher Länge und gewünschter lateraler Ausdehnung abgetrennt. So kann beispielsweise ein Strang mit einer kontinuierlichen Länge und einem gewünschten Durchmesser eine Vielzahl von einzelnen Strängen bereitstellen.

Das Strang oder alternativ der vorgefertigte Strang mit kontinuierlicher Länge kann aus einem oder mehreren Kunststoffmaterialie(n) mittels beispielsweise Extrusions- oder Coextrusionsverfahren auf einfach Art und Weise hergestellt werden. Das eine oder die mehreren Kunststoffmaterialie(n) können ferner so gewählt werden, dass der Strang sterilisierbar ist. Dafür in Frage kommen insbesondere Kunststoffgemische.

Gemäß einer bevorzugten Ausführungsform umfasst der Strang ein Kunststoffgemisch mit hohem Rückstellvermögen, wobei das Kunststoffgemisch Polymere ausgewählt aus Polyphenylenoxid, Polyethylen-Copolymeren, Ethylenvinylacetat (EVA), Styrol/EthylenButylen-Block-Copolymerisat (SEB), Styrol/Ethylen/Butylen/Styrol-Block-Copolymerisat (SEBS), Styrol/Ethylen/Propylen-Copolymerisat (SEP), Polypropylen (PP), StyrolButadien/Styrol-Copolymerisat (SBS), Polybutylen (PB), Ethylen/Propylen/Dien-Kautschuk (EPDM), Ethylen/Propylen-Kunststoff und Styrol/Butadien/Styrol-Block-Polymerisat (SBS), Styrol/Isopren/Styrol-Block-Copolymerisat (SIS) beinhaltet. Vorzugsweise umfasst das Kunststoffgemisch eine Kombination aus PP, SEB und/oder SIS.

In diesem Zusammenhang bezeichnet Rückstellvermögen die Eigenschaft eines Dichtstoffes, die ursprünglichen Maße ganz oder teilweise wieder anzunehmen, nachdem die Kräfte aufgehoben wurden, welche die Verformung verursacht haben. Im Sinne der Erfindung ist der Begriff "hohes Rückstellvermögen" so zu verstehen, dass die Materialien des Strangs so ausgewählt sind, dass dieser auch nach mehrmaligem Einstechen und Herausziehen eines Transferelementes noch dicht abschließt. Ein Transferelement dient dabei zur Entnahme oder zum Zuspritzen von medizinischer Flüssigkeit und kann beispielsweise ein Spikeport, eine Nadel oder ein sonstiges dem Fachmann bekanntes Transferelement sein.

Gemäß einer bevorzugten Ausführungsform umfasst insbesondere eine Innenschicht des Strangs eine oder mehrere der oben genannten Kunststoffmaterialien. Auf diese Weise kann auch bei mehrmaligem Einstechen und Herausziehen eines Transferelements eine dichte Verbindung zwischen Transferelement und Portsystem gewährleistet werden. In der Innenschicht kann zusätzlich ein Kanal vorgesehen sein, um das Einstechen eines Transferelementes zu erleichtern.

Gemäß einer weiteren Ausführungsform des erfindungsgemäßen Verfahrens umfasst der Strang eine oder mehrere Schicht(en), wobei die eine oder mehreren Schicht(en) ein Kunststoffmaterial aus einem oder mehreren der oben genannten Polymere enthält. Vorzugsweise umfasst der Strang mindestens eine Außenschicht, um ihm Stabilität zu verleihen. Die mindestens eine Außenschicht ist dabei so ausgestaltet, dass sie wie eine Versiegelung des Strangs wirkt. Dies ist besonders vorteilhaft, wenn die Kunststoffmaterialien der Innenschicht und/oder gegebenenfalls der Zwischenschichten klebrig sind.

In einer vorteilhaften Ausführungsform des erfindungsgemäßen Verfahrens ist in dem Strang mindestens ein Kanal ausgebildet. Beispielsweise kann der Strang als Schlauch ausgebildet sein. Alternativ kann der mindestens eine Kanal in jeden Strang einzeln eingebracht werden. In beiden Fällen verläuft der mindestens eine Kanal vorzugsweise nahezu mittig entlang der Zylinderachse des Strangs. Wird mehr als ein Kanal in dem Strang vorgesehen, so verlaufen diese Kanäle ebenfalls vorzugsweise mittig, wobei beispielsweise ein Kanal mit der Zylinderachse zusammenfallen kann und die restlichen Kanäle kreis- oder schiffchenförmig um die Zylinderachse herum angeordnet sein können. Der mindestens eine Kanal im Strang erleichtert bei Gebrauch des medizinischen Beutels das Einführen von Transferelementen, die zur Entnahme und/oder zum Zuspritzen der medizinischen Flüssigkeit dienen.

Weiterhin weist ein Kanal im Allgemeinen einen Durchmesser auf, der mit handelsüblichen Transferelementen kompatibel ist. Abhängig von dem Durchmesser des Strangs liegt der Durchmesser des mindestens einen Kanals typischerweise zwischen 3 und 11 mm. Das Vorsehen von mehreren Kanälen kann weiterhin von Vorteil sein, wenn Transferelemente, wie Spikeports oder Nadeln, zur Entnahme oder zum Zuspritzen der medizinischen Flüssigkeit mehrere Einstiche gleichzeitig vorsehen. In diesem Fall kann eine größere Menge Flüssigkeit aus dem medizinischen Beutel entnommen werden bzw. in den medizinischen Beutel eingeführt werden, ohne den Durchmesser des Strangs, der Kanäle oder der Transferelemente ändern zu müssen. Dies kann insbesondere im Hinblick auf ein Gleichteilekonzept in der Herstellung des medizinischen Beutels von Vorteil sein.

In einer weiteren vorteilhaften Ausführungsform des Verfahrens ist die Grundfläche des Strangs schiffchenförmig ausgeführt, und in dem Strang ist ein Kanal entlang der Zylinderachse des Strangs ausgebildet, so dass ein Schlauch entsteht. Der Kanal weist bevorzugt eine im Wesentliche kreisrunde Querschnittsfläche auf, wobei der größte Durchmesser des Kanals typischerweise zwischen 3 und 11 mm liegt. Die Querschnittsfläche des Kanals kann in weiteren Ausführungsformen des Verfahrens auch ovalförmig oder wie das Äußere des Strangs schiffchenförmig ausgestaltet werden.

Ein solcher Schlauch mit schiffchenförmiger Außenkontur und im Wesentlichen kreisförmiger Innenquerschnittsfläche ist besonders geeignet, um mit einer Folie verklebt oder verschweißt zu werden. Die Schiffchenform ermöglicht einen stetigen Übergang zwischen Folie und Schlauch und erleichtert dadurch das Herstellen einer dichten Verbindung mit der Folie gegenüber der Verwendung eines Schlauchs mit runder Außenkontur. Entsprechend ist ein solcher Schlauch mit schiffchenförmiger Außenkontur und vorzugsweise kreisförmiger Querschnittsfläche für alle Anwendungen besonders geeignet, in denen ein Schlauch möglichst dicht zwischen zwei Folien eingeschweißt wird. Ein solcher Schlauch ist daher nicht nur in einer Ausbildung als erfindungsgemäßem Portsystem vorteilhaft, sondern bietet generelle Vorteile bei der Verwendung als Einsatzstück und insbesondere Portsystem jeglicher Ausbildung.

Für das erfindungsgemäße Verfahren stellen der Strang und die Beutelfolie die einzigen Grundmaterialien zur Herstellung des medizinischen Beutelsystems dar. Dabei ist es im Rahmen des vorliegenden Verfahrens vorteilhaft, wenn der Strang und die Beutelfolie sterilisierbar sind.

Gemäß einer Ausführungsform der Erfindung werden zur Herstellung des medizinischen Beutels die Beutelfolie und der Strang miteinander verbunden, wobei ein Abschnitt des Strangs, im Folgenden als Verbindungsabschnitt bezeichnet, mit der Beutelfolie in Verbindung steht und ein weiterer Abschnitt des Strangs aus dem Beutel herausragt. Der Verbindungsabschnitt ist dazu vorgesehenen, die Verbindung des Strangs zu der Beutelfolie herzustellen, wobei ein weiterer Abschnitt des Strangs aus dem Beutel herausragt und der weiteren Ausbildung des Portsystems dient.

Um die Verbindung zwischen der Beutelfolie und dem Strang herzustellen, wird die Beutelfolie in Schritt b) mit dem Strang verklebt oder vorzugsweise verschweißt. Dabei wird die Beutelfolie entlang des Außenrandes zumindest teilweise verschlossen und mit dem Strang verbunden. Vorzugsweise erfolgt das zumindest teilweise Verschließen der Beutelfolie entlang des Außenrandes und das Verbinden mit dem Strang in einem Verfahrensschritt. Alternativ kann die Beutelfolie nach Verschließen entlang des Außenrandes einen offenen Abschnitt vorsehen, der die Verbindung mit dem Strang in einem anschließenden Verfahrensschritt erlaubt.
Das Innere des medizinischen Beutelsystems kann nach Verbinden der Beutelfolie mit dem Strang über mindestens einen Kanal im Strang zugänglich sein. Alternativ kann eine offene Kopfnaht am Beutel vorgesehen sein. Diese befindet sich vorzugsweise an der dem Strang gegenüberliegenden Seite. In einer Ausführungsform erfolgt die Befüllung des medizinischen Beutels mit medizinischer Flüssigkeit vorzugsweise nach Schritt b) des erfindungsgemäßen Verfahrens durch mindestens einen Kanal im Strang. Alternativ kann der medizinische Beutel über eine Öffnung in der Beutelfolie, wie zum Beispiel eine offene Kopfnaht, mit medizinischer Flüssigkeit befüllt werden, wobei die Öffnung anschließend verschlossen wird. Die Befüllung erfolgt in diesem Fall nach Ausbilden des einteiligen Portsystems in Schritt c).

In vorteilhafter Weise wird zur Ausbildung des einteiligen Portsystems in Schritt c) der Strang unter Ausbilden des Abtrennbereichs eingekerbt, wobei gleichzeitig der Verschlussbereich ausgebildet wird. Alternativ kann das einteilige Portsystem durch Quetschen, Heißpressen, Verschweißen oder Erhitzen des aus dem Beutel herausragenden Teils des Strangs gebildet werden. Hierdurch werden ein als Kerbe ausgestalteter Abtrennbereich und ein Verschlussbereich in den Strang eingebracht, wobei der Abtrennbereich zwischen dem Verbindungsbereich und dem Verschlussbereich vorgesehen ist und mindestens entlang einer Dimension eine geringere Materialstärke als der Verbindungsbereich aufweist. Hierbei ist der Abtrennbereich, insbesondere die Kerbe etwa 90° zur Orientierung der Längsstruktur des Kunststoffes vorgesehen. Die Kerbform und die Zusammensetzung des Kunststoffgemisches, das für das Portsystem verwendeten wird, können dabei so angepasst werden, dass sich Abdrehen oder Abknicken im Abtrennbereich leichter gestaltet. Dabei begünstigt PP in der Kunststoffzusammensetzung aufgrund seiner Kerbschlagzähigkeit von 9 kJ/m² bei 23 °C ein Abknicken. Dabei ist die Kerbschlagzähigkeit ein Maß für die Widerstandsfähigkeit eines Kunststoffes gegen eine schlagende (dynamische) Beanspruchung.

Der in Schritt c) ausgebildete Verschlussbereich kann die Form eines Zylinders, eines Kegels, eines Schiffchens oder eine Schmetterlingsflügelform annehmen. Eine Schmetterlingsflügelform ist vorteilhaft, da diese einfach in der Handhabung ist und so ein leichtes Öffnen des Portsystems ermöglicht. Insbesondere beim Öffnen durch Abdrehen bietet ein schmetterlingsförmiger Verschlussbereich eine ausreichende Angriffsfläche für den Benutzer. Zusätzlich ist diese Ausführungsform des Verschlussbereichs einfach durch Heißpressen in einem Verfahrensschritt mit dem Abtrennbereich herzustellen.
In vorteilhafter Weise ist der Strang zumindest teilweise aus einem kerbempfindlichen Kunststoffmaterial wie PP hergestellt. Hierbei bezeichnet die Kerbempfindlichkeit die von einer Kerbe ausgehende Bruchempfindlichkeit eines Materials. So kann der Verschlussbereich des medizinischen Beutels in einfacher Weise ohne Hilfsmittel durch Abdrehen, Abquetschen oder Abknicken in dem dafür vorgesehen Abtrennbereich des Portsystems abgetrennt werden. Dies hat den Vorteil, dass beim Gebrauch des medizinischen Beutels eine sterile Fläche zur Verfügung gestellt wird. Auf diese Weise wird beim Einstechen von Transferelementen einer Kontamination der im Beutel bevorrateten medizinischen Flüssigkeit vorgebeugt.

Das erfindungsgemäße Verfahren und insbesondere der Verfahrensschritt zum Ausbilden des einteiligen Portsystems ist vorteilhaft, da keine weiteren Elemente notwendig sind, um den Beutel zu verschließen. Es reicht aus, einen in Schritt b) des erfindungsgemäßen Verfahrens eingebrachten Strang so zu modifizieren, dass sich ein Portsystem und insbesondere ein Abtrennbereich ausbilden. Dies erspart weitere Herstellungs- oder Positionierungsschritte. Das erfindungsgemäße Verfahren ermöglicht es, ein Portsystem auszubilden, das vorzugsweise eine Länge von 5 bis 60 mm, eine Breite von 8 bis 20 mm und eine Dicke von 5 bis 20 mm aufweist. Da das Portsystem mindestens drei Bereiche umfasst, beziehen sich die Dimensionsangaben auf die maximale Ausdehnung in Länge, Breite oder Durchmesser.

Vor Gebrauch des medizinischen Beutel zur Entnahme oder zum Zuspritzen von medizinischen Flüssigkeiten wird der Verschlussbereich abgetrennt. Dies erlaubt es, das System einfach durch Abdrehen, Abbrechen oder Abschneiden des Verschlussbereichs vor Gebrauch des medizinischen Beutels in dem Abtrennbereich abzutrennen und so eine sterile Oberfläche, vorzugsweise im Bereich eines Kanals, zu bilden. In diesem Zusammenhang ist zu beachten, dass auch nach Abtrennen des Verschlussbereichs ein gegebenenfalls vorliegender Kanal keine Verbindung nach außen zulässt. Der Kanal bleibt also durch die sich bildende sterile Fläche verschossen. Flüssigkeit wird mittels eines Transferelementes, z.B. eines Spikeports, unter Durchstechen der sterilen Fläche und des Verbindungsbereichs entnommen.

Erfindungsgemäß wird weiter ein medizinischer Beutel für medizinische Flüssigkeiten, insbesondere Infusions- und Transfusionsbeutel, vorgeschlagen, der ein Portsystem umfasst, das einteilig ausgestaltet ist und mindestens drei Bereiche aufweist, wobei mindestens ein Abtrennbereich zwischen mindestens einem Verschlussbereich und mindestens einem Verbindungsbereich angeordnet ist und der Abtrennbereich und der Verschlussbereich derart ausgebildet sind, dass beim Abtrennen des Verschlussbereichs eine sterile Fläche an einer Stirnseite des Verbindungsbereichs geschaffen wird.

Der erfindungsgemäße medizinische Beutel mit Portsystem hat den Vorteil, dass dieser aufgrund des einteilig ausgebildeten Portsystems einfach und kostengünstig herzustellen ist. Auch die Handhabung des erfindungsgemäßen medizinischen Beutels mit einteiligem Portsystem ist einfach. Weiterhin stellt das einteilige Portsystem einen sicheren Verschluss dar, der die Aufrechterhaltung steriler Bedingungen innerhalb des medizinischen Beutels vor und während des Gebrauches unterstützt.

In einer bevorzugten Ausführungsform umfasst das Portsystem genau drei Bereich: einen Verbindungsbereich, einen Abtrennbereich und einen Verschlussbereich, der eine Verbindung nach außen unterbindet. Vor Gebrauch des medizinischen Beutels kann der Verschlussbereich in dem Abtrennbereich wahlweise abgedreht, abgequetscht, abgeschnitten oder abgeknickt werden. Dabei entsteht eine sterile Fläche an der Stirnseite des Verbindungsbereichs. Dies erlaubt das Einführen eines Transferelements zur Entnahme oder zum Zuspritzen der medizinischen Flüssigkeit ohne die Sterilität zu beeinträchtigen.

Gemäß einer Ausführungsform des erfindungsgemäßen medizinischen Beutels umfasst der Verbindungsbereich mindestens einen Kanal. Der mindestens eine Kanal ist so ausgestaltet, dass beim Abtrennen des Verschlussbereichs der mindestens eine Kanal verschlossen bleibt. Allerdings erleichtert ein Kanal das Einführen von Transferelementen, insbesondere das Einführen von Spikeports.

Gemäß einer weiteren Ausführungsform ist der Abtrennbereich als Kerbe ausgestaltet und weist somit eine geringere Materialstärke auf als der Verschlussbereich und/oder der Verbindungsbereich. Diese Materialstärke ist vorzugweise so zu wählen, dass ein einfaches Abrechen, Abknicken oder Abschneiden im Abtrennbereich möglich ist. Dabei sind insbesondere Kerben in kerbempfindliche Kunststoffe, wie PP, geeignet. Der medizinische Beutel erlaubt so, trotz der einteiligen Ausführungsform des Portsystems, wodurch eine feste Verbindung zwischen allen Bereichen des Portsystems besteht, einen einfachen Gebrauch des medizinischen Beutels und Transfersystems.

Der erfindungsgemäße medizinische Beutel weist in einer weiteren Ausführungsform ein Portsystem mit einer Länge von 5 bis 60 mm, eine Breite von 8 bis 20 mm und eine Dicke von 5 bis 20 mm auf. Das Portsystem ist einteilig ausgestaltet, und wird aus einem mit der Beutelfolie verbundenen Strang gebildet. Die Ausbildung des Portsystems erfolgt gemäß einer bevorzugten Ausführungsform durch Heißpressen des Strangs in dem Abtrennbereich. Somit wird ein Verschlussbereich gebildet, der in vorteilhafter Weise eine Schmetterlingsflügelform aufweist. Alternativ kann der Verschlussbereich auch die Form eines Zylinders, eines Kegels oder eines Schiffchens annehmen. Allerdings erleichtert eine Schmetterlingsform das Öffnen des Beutels vorzugsweise durch Abdrehen des Verschlussbereichs, da sie eine größere Angriffsfläche bietet. Außerdem ist die Schmetterlingsform des Verschlussbereichs in einfacher Weise beim Ausbilden des Portsystems zu erzielen.

In einer weiteren Ausführungsform des medizinischen Beutels wird das einteilige Portsystem aus einem mit der Beutelfolie verbunden Strang gebildet, wobei die Grundfläche des Strangs eine Schiffchenform aufweist und in dem Strang ein Kanal ausgebildet ist. Die Querschnittsfläche des Kanals weist bevorzugt eine kreisrunde Form auf, weitere Ausgestaltungen, beispielsweise eine ovale oder ebenfalls schiffchenförmige Form, sind ebenfalls möglich. Die Ausbildung des Portsystems erfolgt gemäß einer bevorzugten Ausführungsform durch Heißpressen des Strangs in dem Abtrennbereich. Somit wird ein Verschlussbereich gebildet. Der Verschlussbereich weist bevorzugt ebenfalls schiffchenform auf, kann jedoch auch Schmetterlingsform oder die Form eines Zylinders oder eines Kegels annehmen.

Gemäß einer weiteren Ausführungsform ist der Verschlussbereich zum Entleeren des medizinischen Beutels in dem Abtrennbereich abtrennbar. In einer bevorzugten Weise sind der Verschlussbereich und der Abtrennbereich so ausgestaltet, dass der Verschlussbereich abgedreht, abgeknickt oder abgeschnitten werden kann. Der Abtrennbereich ist vorzugweise so ausgestaltet, dass die Materialstärke in diesem Bereich des Strangs am schwächsten ist und ein einfaches Abtrennen vorzugsweise ohne Hilfsmittel, wie beispielsweise Messer, ermöglicht wird.

Gemäß einer weiteren Ausführungsform des erfindungsgemäßen medizinischen Beutels ist dieser mit Flüssigkeit gefüllt. Dabei kann das Befüllen vor Ausbildung des Portsystems durch einen Kanal im Strang erfolgen. Dies ist von Vorteil, da in einer alternativen Ausführungsform die Befüllung wie oben beschrieben über eine Kopfnaht im dem medizinischen Beutel erfolgen würde, die dementsprechend wieder verschlossen werden müsste. Wird der medizinische Beutel durch eine Kopfnaht befüllt, muss ferner ein sogenannter "head space" vorgesehen werden, um das Verschließen der Kopfnaht zu ermöglichen. Unter einem "head space" ist ein Raum im Beutel zu verstehen, der nicht mit Flüssigkeit gefüllt ist und ein Restluftvolumen beinhaltet.

Erfindungsgemäß wird ferner ein Verfahren zur Entnahme der Flüssigkeit vorgeschlagen, die in einem medizinischen Beutel umfassend ein Portsystem bereitgestellt ist, wobei ein Verschlussbereich des Portsystems in einem Abtrennbereich des Portsystems abgetrennt wird und die Flüssigkeit mit Hilfe mindestens einem Transferelement entnommen wird. Damit wird erfindungsgemäß ein medizinischer Beutel zur Verwendung in einem Verfahren zur Bereitstellung von medizinischen Flüssigkeiten vorgeschlagen, wobei der medizinische Beutel ein Portsystem umfasst, wobei ein Verschlussbereich des Portsystems in einem Abtrennbereich des Portsystems abgetrennt wird und die Flüssigkeit mit Hilfe mindestens einem Transferelement entnommen wird. Hierdurch ist der medizinische Beutel so ausgelegt, dass ein Benutzer den Beutel einfach öffnen kann. Durch Abtrennen des Verschlussbereichs wird eine sterile Fläche geschaffen, die ein steriles Einbringen des mindestens einen Transferelementes sicherstellt.

Im Folgenden wird eine Ausführungsform eines einteiligen Portsystems, wie es im Rahmen der Erfindung für medizinische Beutel zum Einsatz kommt, beschrieben. Dieses Ausführungsbeispiel illustriert eine von vielen möglichen Ausführungsformen der Erfindung und ist nicht als Beschränkung zu verstehen.

### Zeichnungen

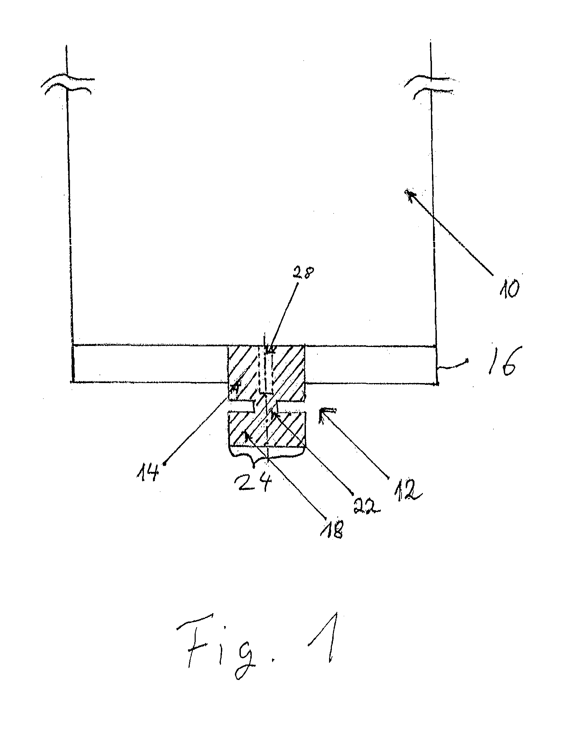

Fig. 1 zeigt in der Schnittansicht einen Ausschnitt eines medizinischen Beutels 10, der eine Portsystem 12 umfasst. Die Darstellung des Portsystems 12 zeigt drei Bereiche, die entlang eines Strangs ausgebildet wurden. Dabei umfasst das Portsystem einen Verbindungsbereich 14, einen Abtrennbereich 22 und einen Verschlussbereich 18.

Der Verbindungsbereich 14 des Portsystems 12 stellt die Verbindung zu der Beutelfolie 16 her, so dass sich ein dichter Verschluss zwischen der Beutelfolie 16 und dem Portsystem 12 ergibt. An den Verbindungsbereich 14 schließt sich ein Abtrennbereich 22 an, der eine geringere Materialstärke aufweist als der Verbindungsbereich 14 und als Kerbe ausgestaltet ist. An den Abtrennbereich 22 schließt sich ein Verschlussbereich 18 an, der eine Schmetterlingsform aufweist. Diese Form hat den Vorteil, dass der Benutzer vor Gebrauch den Verschlussbereich 18 mittels des Abdrehflügels 24 einfach abdrehen kann. Diese Ausgestaltung des Verschlussbereichs 22 ist leicht in der Handhabung und gibt dem Benutzer genug Angriffsfläche, um der Verschlussbereich 18 abzutrennen und so eine sterile Fläche zu erzeugen. Beim Einstechen von Transferelementen durch die sterile Fläche wird eine Kontamination der in dem medizinischen Beutel 10 befindlichen, medizinischen Flüssigkeit vermieden.

Um das Einstechen von Transferelementen zu erleichtern, sind der Strang bzw. das ausgebildete einteilige Portsystem 12 aus einem Kunststoffmaterial mit hohem Rückstellvermögen gefertigt. Ein Kanal 28 im Verbindungsbereich 14 des Portsystems 12 erleichtert das Einstechen weiter. Allerdings reicht dieser Kanal 28 wie in Figur 1 zu erkennen ist nicht bis zum Abtrennbereich 22 und bleibt dementsprechend nach Abtrennen des Verschlussbereichs 22 durch eine dünne leicht durchtrennbare sterile Fläche verschlossen. Der Kanal 28 verringert lediglich die Masse an Material, durch die ein Transferelement stechen muss, bevor die medizinische Flüssigkeit im medizinischen Beutel 10 erreicht wird.

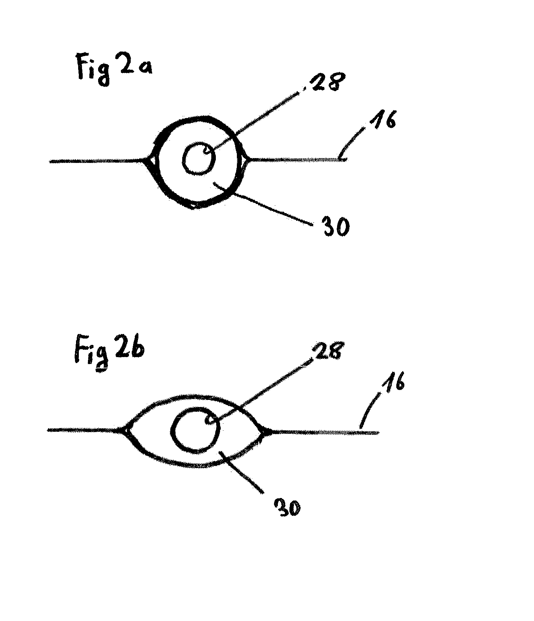

In Figur 2a und 2b sind Schnitte durch zwei verschieden Ausführungsformen eines Schlauchs 30 für eine Verbindung mit einer Beutelfolie 16 dargestellt.

In Figur 2a ist ein Schnitt durch einen Schlauch 30 mit im Wesentlichen kreisrunder Außenkontur dargestellt. Der Innenquerschnitt des im Schlauch ausgebildeten Kanals 28 weist wie die Außenkontur eine im Wesentlichen kreisrunde Form auf. Durch die im Wesentlichen kreisrunde Außenkontur ist eine dichte Verbindung mit einer Beutelfolie 16 erschwert.

In Figur 2b ist ein Schnitt durch einen Schlauch 30 mit schiffchenförmiger Außenkontur dargestellt. Der Innenquerschnitt des im Schlauch ausgebildeten Kanals 28 weist in der dargestellten Ausführungsform eine im Wesentlichen kreisrunde Form auf, eine Ausführung in Schiffchenform wäre jedoch ebenfalls möglich. Die schiffchenförmig ausgeführte Außenkontur erleichtert das Herstellen einer dichten Schweiß- oder Klebeverbindung mit einer Beutelfolie 16.

Das oben beschriebene Konzept für einen medizinischen Beutel erleichtert die Herstellung solcher Beutel und liefert zusätzlich eine einfach und handliche Möglichkeit medizinische Flüssigkeiten aufzubewahren und über ein Transferelement zu entnehmen oder zuzuspritzen.

## Patentansprüche

1. Verfahren zum Herstellen eines medizinischen Beutels (10), insbesondere eines Infusions- oder Transfusionsbeutels, zur Aufnahme medizinischer Flüssigkeiten, umfassend folgende Schritte:
a) Bereitstellen eines Kunststoffstrangs und Bereitstellen von Beutelfolie (16),
b) Verbinden der Beutelfolie (16) und des Strangs zur Ausbildung eines Beutels (10),
c) Ausbilden des Strangs als einteiliges Portsystems (12), umfassend einen Verbindungsbereich (14), einen Abtrennbereich (22) und einen Verschlussbereich (18), wobei der Abtrennbereich (22) und der Verschlussbereich (18) in den Strang so eingebracht werden, dass beim Abtrennen des Verschlussbereichs (18) eine sterile Fläche an einer Stirnseite des Verbindungsbereichs (14) geschaffen wird.

2. Verfahren gemäß Anspruch 1, wobei in Schritt a) die Grundfläche des Stranges schiffchenförmig ausgeführt ist.

3. Verfahren gemäß Anspruch 1, wobei der Strang in Schritt a) ein zylinderförmiges Element ist und das zylinderförmige Element eine laterale Ausdehnung von 8 bis 20 mm und eine Länge von 5 bis 60 mm aufweist.

4. Verfahren gemäß einem der Ansprüche 1 bis 3, wobei der Strang ein Kunststoffgemisch mit hohem Rückstellvermögen umfasst, wobei das Kunststoffgemisch ein oder mehrere Polymere ausgewählt aus Polyphenylenoxid, Polyethylen-Copolymeren, Ethylenvinylacetat (EVA), Styrol/Ethylen/Butylen-Block-Copolymerisat (SEB), Styrol/Ethylen/Butylen/Styrol-Block-Copolymerisat (SEBS), Styrol/Ethylen/Propylen-Copolymerisat (SEP), Polypropylen (PP), Styrol/Butadien/Styrol-Copolymerisat (SBS), Polybutylen (PB), Ethylen/Propylen/Dien-Kautschuk (EPDM), Ethylen/Propylen-Kunststoff und Styrol/Butadien/Styrol-Block-Polymerisat (SBS), Styrol/Isopren/Styrol-Block-Copolymerisat (SIS) umfasst.

5. Verfahren gemäß einem der Ansprüche 1 bis 4, wobei der Strang mindestens einen Kanal (28) aufweist, der so ausgebildet ist, dass beim Abtrennen des Verschlussbereichs (18) der mindestens eine Kanal (28) verschlossen bleibt.

6. Verfahren gemäß einem der Ansprüche 1 bis 5, wobei die Beutelfolie (16) in Schritt b) mit dem Strang verschweißt wird.

7. Verfahren gemäß einem der Ansprüche 1 bis 6, wobei der medizinische Beutel (10) nach Schritt c) über eine offene Kopfnaht des medizinischen Beutels (10) mit medizinischer Flüssigkeit befüllt wird.

8. Verfahren gemäß einem der Ansprüche 2 bis 6, wobei der medizinische Beutel (10) nach Schritt b) über mindestens einen Kanal (28) im Strang mit medizinischer Flüssigkeit befüllt wird.

9. Verfahren gemäß einem der Ansprüche 1 bis 8, wobei der Abtrennbereich (22) des Strangs bei dem Ausbilden des Portsystems (12) in Schritt c) durch Heißpressen erzeugt wird.

10. Verfahren gemäß einem der Ansprüche 1 bis 9, wobei der Verschlussbereich (18) bei dem Ausbilden des Portsystems (12) in die Form eines Zylinders, eines Kegels, eines Schiffchens oder eine Schmetterlingsflügelform gebracht wird.

11. Medizinischer Beutel (10) für medizinische Flüssigkeit, insbesondere Infusions- und Transfusionsbeutel, umfassend ein Portsystem (12), wobei das Portsystem (12) einteilig ausgestaltet ist und einen Abtrennbereich (22) zwischen einem Verschlussbereich (18) und einem Verbindungsbereich (14) aufweist, und der Abtrennbereich (22) und der Verschlussbereich (18) derart ausgebildet sind, dass beim Abtrennen des Verschlussbereichs (18) eine sterile Fläche an einer Stirnseite des Verbindungsbereichs (14) geschaffen wird.

12. Medizinischer Beutel gemäß Anspruch 11, **dadurch gekennzeichnet, dass** die Grundfläche des Portsystems (12) schiffchenförmig ausgebildet ist.

13. Medizinischer Beutel (10) gemäß Anspruch 11 oder 12, **dadurch gekennzeichnet, dass** mindestens ein Kanal (28) im Verbindungsbereich (14) des Portsystems (12) ausgebildet ist.

14. Medizinischer Beutel (10) gemäß einem der Ansprüche 11 oder 13, **dadurch gekennzeichnet, dass** der Abtrennbereich (22) als Kerbe ausgestaltet ist und mindestens entlang einer Dimension eine geringere Materialstärke aufweist als der Verschlussbereich (18) und/oder der Verbindungsbereich (14) und dass der Verschlussbereich (18) eine zum Abreißen, Abknicken oder Abquetschen geeignete Form aufweist.

15. Verfahren zur Entnahme einer medizinischen Flüssigkeit, die in einem medizinischen Beutel (10) umfassend ein Portsystem (12) gemäß einem oder mehreren der Ansprüche 11 bis 14 bereitgestellt ist, wobei ein Verschlussbereich des Portsystems (12) in einem Abtrennbereich (22) des Portsystems (12) abgetrennt wird und die Flüssigkeit mit Hilfe mindestens eines Transferelements entnommen wird.

## Claims

1. Method of producing a medical fluid bag (10), in particular an infusion or transfusion bag, for receiving medical fluids, comprising the following steps:
a) supplying a plastic strip and supplying bag sheet material (16),
b) connecting the bag sheet material (16) and the strip to form a bag (10),
c) forming the strip as a single-piece port system (12) comprising a connecting region (14), a separating-off region (22) and a closure region (18), wherein the separating-off region (22) and the closure region (18) are introduced into the strip such that the action of separating off the closure region (18) gives rise to a sterile surface area on an end side of the connecting region (14).

2. Method according to Claim 1, wherein, in step a), the base surface area of the strip is of boat-like configuration.

3. Method according to Claim 1, wherein the strip, in step a), is a cylindrical element, and the cylindrical element has a lateral extent of 8 to 20 mm and a length of 5 to 60 mm.

4. Method according to one of Claims 1 to 3, wherein the strip comprises a mixture of plastics with a high restoring capacity, wherein the mixture of plastics comprises one or more polymers selected from polyphenyleneoxide, polyethylene copolymers, ethylene vinyl acetate (EVA), styrene-ethylene-butylene block copolymer (SEB), styrene-ethylene-butylene-styrene block copolymer (SEBS), styrene-ethylene-propylene copolymer (SEP), polypropylene (PP), styrene-butadiene-styrene copolymer (SBS), polybutylene (PB), ethylene-propylene-diene rubber (EPDM), ethylene-propylene plastic and styrene-butadiene-styrene block polymer (SBS), styrene-isoprene-styrene block copolymer (SIS).

5. Method according to one of Claims 1 to 4, wherein the strip has at least one channel (28) which is designed such that the at least one channel (28) remains closed when the closure region (18) is separated off.

6. Method according to one of Claims 1 to 5, wherein the bag sheet material (16), in step b), is welded to the strip.

7. Method according to one of Claims 1 to 6, wherein the medical fluid bag (10), following step c), is filled with medical fluid via an open head seam of the medical fluid bag (10).

8. Method according to one of Claims 2 to 6, wherein the medical fluid bag (10), following step b), is filled with medical fluid via at least one channel (28) in the strip.

9. Method according to one of Claims 1 to 8, wherein the separating-off region (22) of the strip is created by hot press molding as the port system (12) is formed in step c).

10. Method according to one of Claims 1 to 9, wherein the closure region (18) is provided in the form of a cylinder, of a cone, of a boat or of a butterfly wing as the port system (12) is formed.

11. Medical fluid bag (10), in particular infusion and transfusion bag, comprising a port system (12), wherein the port system (12) is configured in one piece and has a separating-off region (22) between a closure region (18) and a connecting region (14), and the separating-off region (22) and the closure region (18) are designed such that the action of separating off the closure region (18) gives rise to a sterile surface area on an end side of the connecting region (14).

12. Medical fluid bag according to Claim 11, **characterized in that** the base surface area of the port system (12) is of boat-like design.

13. Medical fluid bag (10) according to Claim 11 or 12, **characterized in that** at least one channel (28) is formed in the connecting region (14) of the port system (12).

14. Medical fluid bag (10) according to either of Claims 11 and 13, **characterized in that** the separating-off region (22) is configured in the form of a notch and, at least along one dimension, has a smaller material thickness than the closure region (18) and/or the connecting region (14), and **in that** the closure region (18) is in a form suitable for being torn off, snapped off or pinched off.

15. Method of removing a medical fluid which is supplied in a medical fluid bag (10) comprising a port system (12) according to one or more of Claims 11 to 14, wherein a closure region of the port system (12) is separated off in a separating-off region (22) of the port system (12) and the fluid is removed with the aid of at least one transfer element.

## Revendications

1. Procédé de fabrication d'une poche (10) médicale, en particulier d'une poche de perfusion ou de transfusion, destinée à recevoir des liquides médicaux, comprenant les étapes suivantes :
a) fourniture d'un cordon en matière plastique et fourniture d'un film pour poche (16),
b) raccordement du film pour poche (16) et du cordon pour former une poche (10),
c) formation du cordon en tant que système d'orifice (12) d'une seule pièce, comprenant une zone de raccordement (14), une zone de séparation (22) et une zone de fermeture (18), la zone de séparation (22) et la zone de fermeture (18) étant mises en place dans le cordon de telle sorte que, lors de la séparation de la zone de fermeture (18), il est créé une surface stérile au niveau d'un côté frontal de la zone de raccordement (14).

2. Procédé selon la revendication 1, la surface de base du cordon étant réalisée en forme de navette dans l'étape a).

3. Procédé selon la revendication 1, le cordon étant dans l'étape a) un élément de forme cylindrique et l'élément de forme cylindrique présentant une étendue latérale de 8 à 20 mm et une longueur de 5 à 60 mm.

4. Procédé selon une des revendications 1 à 3, le cordon comprenant un mélange de matière plastique ayant une reprise élastique élevée, le mélange de matière plastique comprenant un ou plusieurs polymères sélectionnés parmi le polyoxyde de phénylène, des copolymères de polyéthylène, l'éthylène-acétate de vinyle (EVA), le copolymérisat séquence de styrène/éthylène/butylène (SEB), le copolymérisat séquencé de styrène/éthylène/butylène/styrène (SEBS), le copolymérisat de styrène/éthylène/proylène (SEP), le polypropylène (PP), le copolymérisat de styrène/butadiène/styrène (SBS), le polybutylène (PB), le caoutchouc éthylène/propylène/diène (EPDM), la matière plastique éthylène/propylène et le polymérisat séquencé de styrène/butadiène/styrène (SBS), le copolymérisat séquencé de styrène/isoprène/styrène (SIS).

5. Procédé selon une des revendications 1 à 4, le cordon présentant au moins un canal (28) qui est formé de telle sorte que, lors de la séparation de la zone de fermeture (18), le canal (28) au moins au nombre de un demeure fermé.

6. Procédé selon une des revendications 1 à 5, le film pour poche (16) étant assemblé par soudage au cordon dans l'étape b).

7. Procédé selon une des revendications 1 à 6, la poche (10) médicale étant, après l'étape b), remplie de liquide médical par le biais d'une soudure de tête ouverte de la poche (10) médicale.

8. Procédé selon une des revendications 2 à 6, la poche (10) médicale étant, après l'étape b), remplie de liquide médical par le biais d'au moins un canal (28) dans le cordon.

9. Procédé selon une des revendications 1 à 8, la zone de séparation (22) du cordon étant produite par pressage à chaud lors de la formation du système d'orifice (12) dans l'étape c).

10. Procédé selon une des revendications 1 à 9, la zone de fermeture (18) étant, lors de la formation du système d'orifice (12), amenée à prendre la forme d'un cylindre, d'un cône, d'une navette ou une forme d'aile de papillon.

11. Poche (10) médicale pour liquide médical, en particulier poche de perfusion et de transfusion, comprenant un système d'orifice (12), le système d'orifice (12) étant constitué d'une seule pièce et présentant une zone de séparation (22) entre une zone de fermeture (18) et une zone de raccordement (14), et la zone de séparation (22) et la zone de fermeture (18) étant formées de telle sorte que, lors de la séparation de la zone de fermeture (18), il est créé une surface stérile au niveau d'un côté avant de la zone de raccordement (14).

12. Poche (10) médicale selon la revendication 11, **caractérisée en ce que** la surface de base du système d'orifice (12) est formée en forme de navette.

13. Poche (10) médicale selon la revendication 11 ou 12, **caractérisée en ce qu'**au moins un canal (28) est formé dans la zone de raccordement (14) du système d'orifice (12).

14. Poche (10) médicale selon une des revendications 11 ou 13, **caractérisée en ce que** la zone de séparation (22) est constituée en tant qu'entaille et présente, au moins le long d'une dimension, une épaisseur de matériau plus faible que la zone de fermeture (18) et/ou que la zone de raccordement (14), et **en ce que** la zone de fermeture (18) présente une forme appropriée pour l'arrachement, le pliage ou l'écrasement.

15. Procédé de prélèvement d'un liquide médical qui est fourni dans une poche (10) médicale comprenant un système d'orifice (12) selon une ou plusieurs des revendications 11 à 14, la zone de fermeture du système d'orifice (12) étant séparée dans une zone de séparation (22) du système d'orifice (12) et le liquide étant prélevé à l'aide d'au moins un élément de transfert.
